# EUROPEAN PATENT SPECIFICATION

(11) **EP 0 663 644 B1**
(45) Date of publication and mention of the grant of the patent: **18.09.2002**
(21) Application number: 94830011.6
(22) Date of filing: 13.01.1994
(51) Int. Cl.: G06K 9/68, G06K 9/80

(54) **Alphanumeric characters images recognizing system**
Anlage zur Bilderkennung alphanumerischen Zeichen
Système pour reconnaître des images de caractères alphanumériques

(43) Date of publication of application: 19.07.1995
(73) Proprietor: STMicroelectronics S.r.l., 20041 Agrate Brianza (Milano) (IT)
(72) Inventor: Kovacs,Zsolt, I-40136 Bologna (IT)
(74) Representative: Cerbaro, Elena, Dr.

(56) References cited:
- 1990 IEEE INT. COMF. ON SYSTEMS, MAN, AND CYBERNETICS 4 November 1990 , LOS ANGELES, CA page 835-8 D W FINCHER ET AL 'Multi-sensor data fusion using neural networks'
- IEEE TRANS. ON CIRCUITS AND SYSTEMS vol. 35, no. 10 , October 1988 pages 1273 - 90 L O CHUA ET AL 'Cellular neural networks: applications'

## Description

The present invention relates to image recognition systems and in particular to alphanumeric character image recognition systems.

Alphanumeric character image recognition systems can have numerous applications.

For example, in mail where it is necessary to read addresses written on letter envelopes, postcards or packages to be then sent to an assigned destination, the use of such systems is useful in automating the reading and sending operations, reducing in addition to the costs of labour presently employed to carry out the above operations also service delays.

These systems can also be used in the recognition of tax or census forms or in the recognition of medical prescription texts.

Another application of such systems which have recently taken on ever growing importance, is tied to the computer miniaturisation process.

Indeed, in the provision of this process there has emerged a limit represented by the dimensions of the keyboard which cannot be reduced below a certain size.

To replace the keyboard it was thought to use a small tablet connected to the computer.

On said tablet the user can write alphanumeric characters in sequence with a pen.

A recognition system is necessary to provide an interface with the computer.

It is known that, in general, an alphanumeric character image recognition system consists of three cascaded stages.

The first of these stages performs on digital image signals a normalisation which serves to eliminate irregularities present in human writing.

Aspects such as image size, character slant and defining line thickness are normally considered in this stage.

The second stage processes from normalised digital image signals of the first stage, image information which will be used by the third stage to perform classification of the images to be recognised.

In the literature there are different descriptions of alphanumeric character recognition systems.

For example, to mention the best systems, AT&T uses systems based on the so-called "nearest first k" algorithm described in Pattern Classification and Scene Analysis by R.O. Duda and P.E. Hart, NY: John Wiley and Sons, 1973, or systems based on multilevel perceptrons.

The latter are described in the article "Learning internal representations by error propagation" by D.E. Rumelhart, G.E. Hinton, R.J. Williams, published in Parallel Distributed Processing, D.E. Rumelhart, J.L. McCleland and the PDP Research Group, publ. MIT Press, Cambridge, Mass. pages 318-362, 1986.

Systems based on the "nearest first k" algorithm and those based on multilevel perceptrons are applied to digital image signals which are normalised in size and blurred with a Gaussian filter as described in the article "Hand-written Digit Recognition with a Back-Propagation Network" by Y. Le Cun, B. Boser, J.S. Denker, D. Henderson, R:E. Howard, W. Hubbard, L.D. Jackel, published in Neural Information Processing Systems, D. Touretzky publ., Vol. 2, Morgan Kaufmann, 1990. AEG uses a system comprising a first stage which performs normalisation of image size, character slant and line thickness defining them and a second stage based on the "Karhunen Loeve Transform" described in the article "Karhunen Loeve feature extraction for neural hand-written character recognition" by P.J. Grother published in Proc. of Applications of Artificial Neural Network III, Orlando, SPIE, April 1992.

A third stage included in the system is provided with a polynomial classifier known in the literature.

IBM uses a system including a first and a second image information processing stage and a third stage provided by a multilevel perceptron.

Another alphanumeric character recognition system is described in the article "Multi-sensor data fusion using neural networks" by D. Wade Fincher and Dwight F. Mix, published in 1990 IEEE International Conference on Systems, Man, and Cybernetics, November 4-7, 1990, LOS ANGELES, CA pages 835-8. This known alphanumeric character recognition system discloses three different feature extractors designed to extract, respectively, first, second, and third image information of an input alphanumeric character image. These first, second, and third image information are related to first, second and third features of the input alphanumeric character image. Then, each feature extractor compares the related image information with a template character for producing statistical information on how close the input alphanumeric character image is to the template character. The statistical information obtained by each feature extractor are then combined with a neural network to produce a final classification of the input alphanumeric character image. In another embodiment of the al- phanumeric character recognition system the neural network is used to combine directly the first, second, and third image information.

The technical problem underlying the present invention is to provide an alphanumeric character image recognition system which would be better in terms of recognitio>n quality than the systems known heretofore in the scientific and industrial environment.

The above mentioned technical problem is solved by an alphanumeric character image recognition system defined in the claims which follow the following description.

The characteristics and advantages of the alphanumeric character image recognition system in accordance with the present invention are set forth in the following description of an embodiment thereof given by way of nonlimiting example with reference to the annexed drawings.

In the drawings -
- FIG. 1: shows a block diagram of a preferred embodiment of an alphanumeric character image recognition system in accordance with the present invention,
- FIG. 2: shows a chart in which the numeric character image recognition quality of a recognition system provided in accordance with the present invention is compared with that of known systems for the same numeric character images,
- FIG. 3: shows a chart in which the image recognition quality of capital letters for a recognition system provided in accordance with the present invention is compared with that of known systems for the same capital letters, and
- FIG. 4: shows a chart in which the image recognition quality of lower-case letters for a recognition system provided in accordance with the present invention is compared with that of known systems for the same lower-case letters.

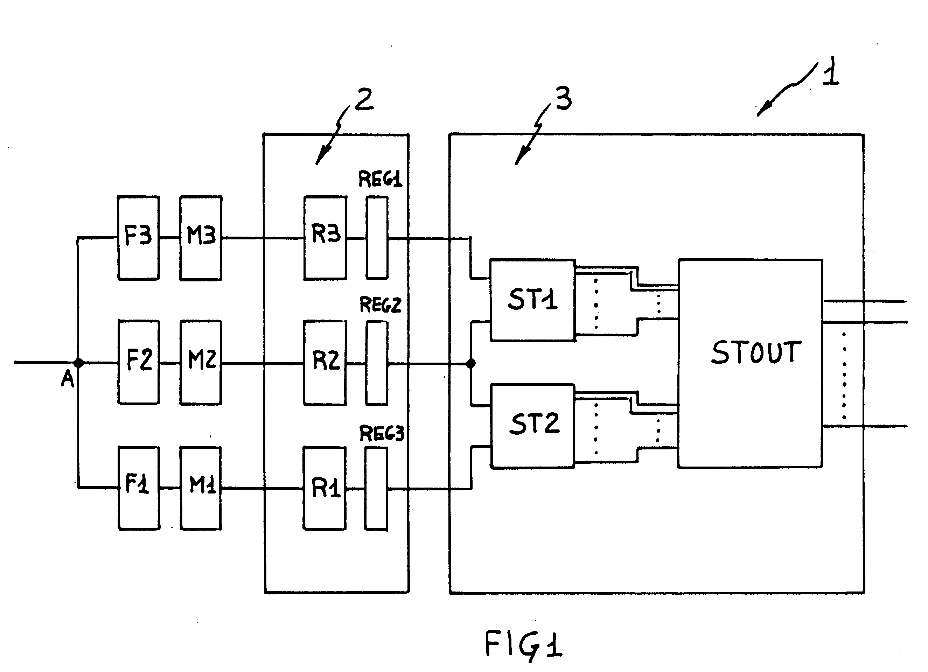

The block diagram of FIG. 1 shows a preferred embodiment of an alphanumeric character image recognition system designated by 1 and comprising a first stage 2 and a second stage 3.

In the first stage 2 are included a first R1, a second R2 and a third R3 digital signal processing network for an input image obtained through a scanner or through a telecamera.

The networks R1, R2, R3 each have at least an input terminal coupled with an input circuit node A which is an input terminal of the system 1 and an output terminal.

Between the input terminal of the first network R1 and said input circuit node A are inserted a first filter F1, having at least one input terminal and at least one output terminal and a first memory element M1 having at least one input terminal connected to the output terminal of the filter F1 and at least one output terminal.

Between the input terminal of the second network R2 and the input circuit node A are inserted a second filter F2 having at least one input terminal and at least one output terminal and a second memory element M2 having at least one input terminal connected to the output terminal of the filter F2 and at least one output terminal while between the input terminal of the third network R3 and the input circuit node A are inserted a third filter F3 having at least one input terminal and at least one output terminal and a third memory element M3 having at least one input terminal connected to the output terminal of the filter F3 and at least one output terminal.

The filters F1, F2, F3 and consequently the memory elements M1, M2 and M3 are surely in the preferred embodiment but their presence is not essential to recognition or they could be replaced by optional normalisation or processing elements.

For example, there is described below operation of an alphanumeric character recognition system not including the filter F3 and the memory element M3, i.e. the input terminal of the third network R3 will be connected directly to the circuit node of input A.

In the first stage 2 are included in addition a first memory register REG1, a second memory register REG2 and a third memory register REG3 having each at least one input terminal and at least one output terminal.

The input terminals of said first REG1, second REG2 and third REG3 memory registers are connected to the output terminal of the first network R1, to the output terminal of the second network R2 and to the output terminal of the third network R3 respectively.

The second stage 3 of the system 1 includes a first statistical network ST1 and a second statistical network ST2 each having at least a first and a second input terminal and a plurality of output terminals.

The first input terminal of the first statistical network ST1 is connected to the output terminal of the first memory register REG1 while the second input terminal of said first statistical network ST1 is connected to the output terminal of the second memory register REG2.

The first input terminal of the second statistical network ST2 is connected to the output terminal of the second memory register REG2 while the second input terminal of said second statistical network ST2 is connected to the output terminal of the third memory register REG3.

In stage 3 is also included a third statistical network STOUT having a plurality of input terminals connected to a plurality of output terminals of the first ST1 and second ST2 statistical networks and a plurality of output terminals which are output terminals of the system 1.

More specifically said first statistical network ST1, second statistical network ST2 and third statistical network ST3 STOUT are neuronal networks of which the first ST1 and second ST2 statistical networks include each at least a first level or plane of neurons, each of the neurons of the first statistical network ST1 having at least a first and a second input terminal connected to the output terminal of the first memory register REG1 and to the output terminal of the second memory register REG2 respectively and each of the neurons of the second statistical network ST2 having at least a first and a second input terminal connected to the output terminal of the second memory register REG2 and to the output terminal of the third memory register REG3 respectively and an output terminal.

Said first ST1 and second ST2 statistical networks can also include each at least a second level of neurons each having a plurality of input terminals connected to a plurality of output terminals of the first level of neurons.

The statistical network STOUT includes at least one level of neurons having each a plurality of input terminals connected to a plurality of output terminals of neurons of the first statistical network ST1 and neurons of the second statistical network ST2 and an output terminal which is an output terminal of the system 1.

To further improve the recognition quality of the system 1, in the stage 3 can also be included a fourth statistical network ST3 having at least a first and a second input terminal and the first input terminal of said fourth statistical network ST3 being connected to the output terminal of the first memory register REG1 and the second input terminal being connected to the output terminal of the third memory register REG3.

The statistical network ST3 also has a plurality of output terminals connected to a plurality of input terminals of the third statistical network STOUT.

Said statistical network ST3 is also a neuronal network comprising at least a first level of neurons having each at least a first and a second input terminal connected to the output terminal of the first memory register REG1 and the output terminal of the third memory register REG3 and an output terminal.

The statistical network ST3 can also include at least a second level of neurons having each a plurality of input terminals connected to a plurality of output terminals of the first level of neurons.

Now operation of the system 1 in accordance with the present invention will be examined.

Digital signals of an image input to the system 1 through the filter F1 are normalised in size and slant to then be memorised in the memory element M1 and, through the filter F2 which operates in parallel with the filter F1, said signals are normalised in slant to then be memorised in the memory element M2.

As mentioned above, the filter F3 and the memory element M3 are not included in the recognition system described here.

The normalised digital signals memorised in the memory element M1 and in the memory element M2 are inputs of the networks R1 and R2 respectively.

Said networks R1 and R2 are designed to process from the normalised digital signals image information which will be used subsequently to recognise the image input to the system 1.

More specifically, using the "distance transform" described in the article "Computer Recognition of Hand-Written Characters using the Distance transform" of Zs.M. Kovacs and R. Guerrieri, which appeared in Electronics Letters, Vol. 28, No. 19, pages 1825-1827, 1992, the network R1 processes information on the position of the dark points of the image to be recognised.

The information is then memorised in the memory register REG1.

The network (R2) processes image information on the direction of the edge of the image to be recognised. More specifically, the normalised image is divided in regions of the same size and the image points belonging to vertical, horizontal and diagonal lines at 45 and 135 degrees with the image edge are counted for each region.

These operations are described in the article "Statistical and Neural Classification of Hand-Written Numerals: A Comparative Study" by J. Cao, M. Shridhar, F. Kimura and M. Ahmadi published in Proc. 11th IAPR, The Hague, The Netherlands, Vol. 2, pages 643-646, in August 1992.

The image information thus obtained is memorised in the memory register REG2.

The network R3 on the other hand acts on unnormalised digital signals of the image input.

This network processes from the image signals information concerning the curvature of the image edge to be recognised.

More specifically the image is divided in regions and the image points which belong to the edge are separated in two groups, those belonging to the concave zones of the edge and those belonging to the convex zones.

The image points belonging to each group are then further divided depending on the slant of the normal to the edge passing through each of them.

Of these image points only those whose tangent to the edge has an angular variation above a pre-set threshold are then considered.

These operations are described in the article "A neural Net OCR using Geometrical and Zonal Pattern Features" by H. Takahashi published in Proc. of Int. Conf. on Document Analysis and Recognition, France, pages 821-828, 1991.

The image information thus obtained is memorised in the memory register REG3.

The image information memorised in the memory registers REG1, REG2, REG3 is input of the statistical networks ST1 and ST2.

The statistical networks ST1 and ST2 are neuronal networks operating in parallel which perform on the image information consecutive statistical operations until they obtain statistical values which are inputs for the statistical network STOUT.

The network STOUT is also a neuronal network which coordinates the statistical values coming from the networks ST1 and ST2 and supplies at output statistical values corresponding to a predetermined classification of the image to be recognised.

In particular the statistical networks ST1 and ST2 are made up of multilevel perceptrons of the "feed forward" type with neurons having the so-called "activation functions" of the sigmoid type.

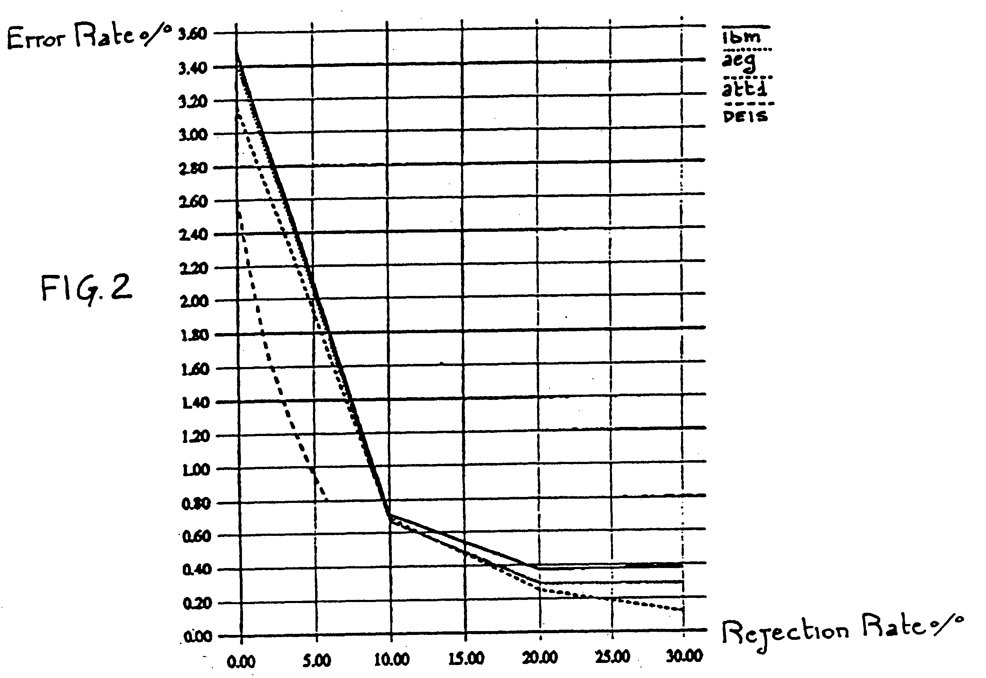

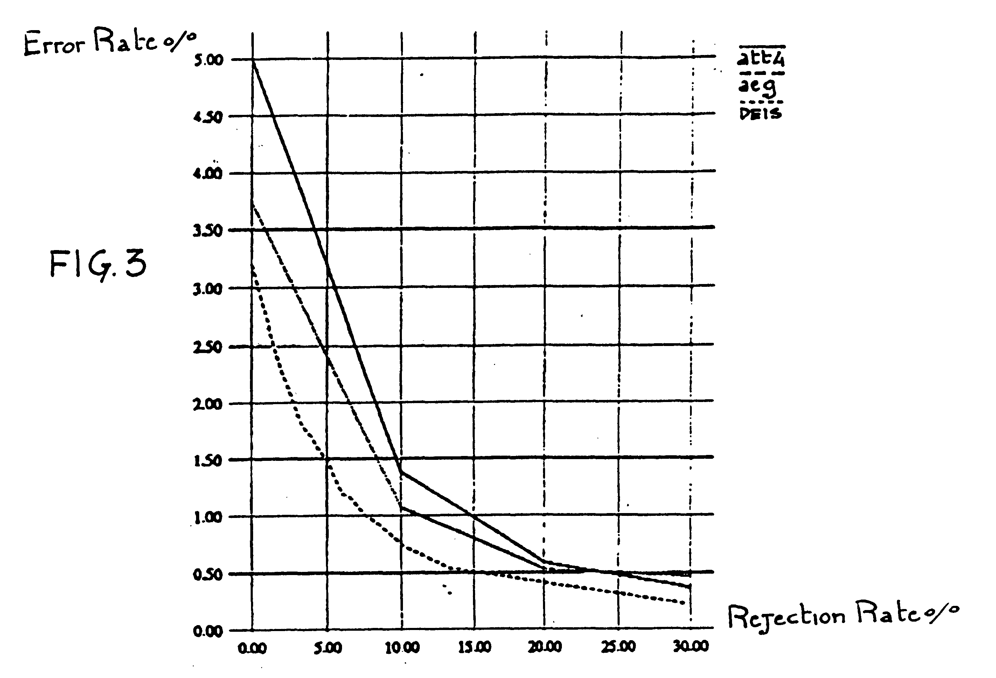

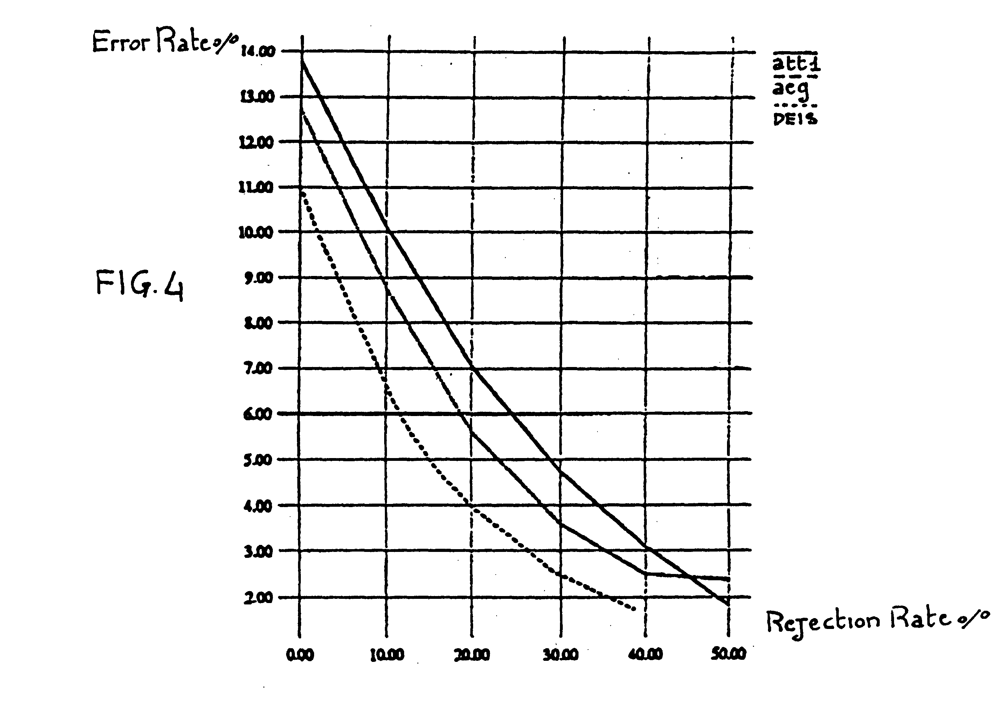

For comparison of the recognition qualities of systems there are used charts given in FIGS. 2, 3 and 4 for recognition of numerical character images, capital letter images and lower-case letter images respectively which show on the ordinate the percentage of error for the percentage of image not recognised by the systems analysed.

The error is reported as a percentage by dividing the number of images not correctly classified by the systems considered by the number of images classified correctly and incorrectly by said systems.

If a system operates correctly, the corresponding curve on the charts decreases since the ambiguous images are those which contribute most to the classification errors.

Therefore, the "lower" the curve associated with a given system on each of the charts of FIGS. 2, 3 and 4, the better the quality of recognition of the system.

To obtain these charts there is used an assemblage of images related to the so-called NIST Test Data 1 which contains 58646 numerical character images, 11941 capital letter images and 12000 lower-case letter images.

In the three charts of FIGS. 2, 3 and 4 are shown the curves of known systems while the curve for the system described here is the one denominated "DEIS".

Said curve is the "lowest" on each of the charts, showing that the quality of recognition of the system which is the object of this patent application is the best of those of the systems analysed.

## Claims

1. Alphanumeric character image recognition system comprising a first stage (2) including at least first (R1), second (R2) and third (R3) digital image signal processors, each, having at least one input terminal and at least one output terminal, said digital image signal processors (R1, R2, R3) being designed to extract, respectively, first, second, and third image information from digital image signals of an input image, said first, second and third image information being related to first, second and third feature of said input image, respectively, and including at least first (REG1), second (REG2) and third (REG3) memory registers, each, having at least one input terminal and at least one output terminal, said input terminals of said first (REG1), second (REG2) and third (REG3) memory registers being connected, respectively, to the output terminal of said first digital image signal processor (R1), to the output terminal of said second digital image signal processor (R2) and to the output terminal of said third digital image signal processor (R3), said memory registers (REG1, REG2, REG3) being designed to contain, respectively, said first, second and third image information, and a second stage (3), and **characterised in that** said second stage (3) includes at least one first (ST1) and one second (ST2) neural network, each, having at least one first and one second input terminal and a plurality of output terminals, the first input terminal of said first neural network (ST1) being connected to the output terminal of said first memory register (REG1) and the second input terminal of said first neural network (ST1) being connected to the output terminal of said second memory register (REG2) and, the first input terminal of said second neural network (ST2) being connected to the output terminal of said second memory register (REG2) and the second input terminal of said second neural network (ST2) being connected to the output terminal of said third memory register (REG3), and at least one third neural network (STOUT) having a plurality of input terminals connected to the plurality of output terminals of said first (ST1) and second (ST2) neural network and a plurality of output terminals which are output terminals of the system (1), said first (ST1) and second (ST2) neural networks being designed to carry out operations, respectively, on said first and second features of said input image and on said second and third features of said input image until statistical values are obtained, and said third neural network (STOUT) being designed to coordinate said statistical values and to produce a predetermined classification of the input image.

2. System in accordance with claim 1 **characterised in that** between an input (A) of said system (1) and the input terminal of at least one of said first (R1), second (R2) and third (R3) digital image signal processor is inserted at least one first filter (F1) having at least one input terminal and at least one output terminal, and at least one first memory element (M1) having at least one input terminal connected to the output terminal of said first filter (F1), at least one output terminal and said filter (F1) being designed to perform a normalisation of the digital signals of the input image and said memory element (M1) being designed to memorise digital signals of the normalised input image.

3. System in accordance with claims 1 and 2 **characterised in that** each of said first (ST1) and second (ST2) neural networks include at least a first level of neurons, each neuron of said first neural network (ST1) having at least one first and one second input terminal connected to the output terminal of said first memory register (REG1) and to the output terminal of said second memory register (REG2), respectively, and at least one output terminal, and each of the neurons of said second statistical network (ST2) having at least one first and one second input terminal connected to the output terminal of said second memory register (REG2) and to the output terminal of said third memory register (REG3), respectively, and at least one output terminal.

4. System in accordance with any one of claims 1, 2 and 3 **characterised in that** each of said first (ST1) and second (ST2) neural networks include at least one second level of neurons, each, having a plurality of input terminals connected to a plurality of output terminals of said first level of neurons .

5. System in accordance with any one of claims 1, 2, 3 and 4 **characterised in that** said third neural network (STOUT) includes at least one level of neurons, each neuron having a plurality of input terminals connected to a plurality of output terminals of the neurons of said first neural network (ST1) and of the neurons of said second neural network (ST2), and at least one output terminal which is an output terminal of said system (1).

6. System in accordance with any one of claims 1, 2, 3, 4 and 5 **characterised in that** the neurons of said first (ST1), second (ST2) and third (STOUT) neural networks are of the sigmoid type.

7. System in accordance with any one of claims 1 and 2 **characterised in that** the second stage (3) includes at least a fourth neural network (ST3) having at least a first and a second input terminal, said first input terminal being connected to the output terminal of said first memory register (REG1) and said second input terminal being connected to the output terminal of said third memory register (REG3) and a plurality of output terminals connected to a plurality of input terminals of said third neural network (STOUT).

8. System in accordance with any one of claims 1, 2 and 7 **characterised in that** said fourth neural network (ST3) includes at least one first level of neurons, each neuron having at least one first and one second input terminal connected to the output terminal of said first memory register (REG1) and to the output terminal of said third memory register (REG3), respectively, and at least one output terminal.

9. System in accordance with any one of claims 1,2, 7 and 8 **characterised in that** said fourth neural network (ST3) includes at least one second level of neurons each having a plurality of input terminals connected to a plurality of output terminals of the neurons of the first level.

10. System in accordance with any one of claims 1, 2, 7, 8 and 9 **characterised in that** the neurons of said fourth neural network (ST3) are of the sigmoid type.

11. System in accordance with any one of the above claims **characterised in that** said first feature of said input image is related to the position of the dark points of said input image.

12. System in accordance with any one of the above claims **characterised in that** said second feature of said input image is related to the direction of the tangent to the edge of said input image, in points of said edge.

13. System in accordance with any one of the above claims **characterised in that** said third feature of the input image is related to the curvature of said edge of said input image in contours of points of said edge.

14. Method for identifying an alphanumeric character image comprising the steps of:
- generating an input image;
- extracting by means of first, second and third digital image signal processors (R1, R2, R3), respectively, first, second and third image information from digital image signals of said input image, said first, second and third image information being related to first, second and third features of said input image;
- storing into first, second and third memory registers (REG1, REG2, REG3), respectively, said first, second and third image information related to said image features of said input image;
and **characterized by** the steps of :
- processing said first and second features of said input image with a first neural network (ST1) to generate first statistical values;
- processing said second and third features of said input image with a second neural network (ST2) to generate a second statistical values;
- processing said first and second statistical values with a third neural network (STOUT) to produce a predetermined classification of said input image.

## Patentansprüche

1. Alphanumerisches Zeichenbilderkennungssystem, das Folgendes aufweist:
eine erste Stufe (2), die mindestens erste (R1), zweite (R2) und dritte (R3) digitale Bildsignalprozessoren aufweist, von denen jeder mindestens einen Eingangsanschluß bzw. -Terminal und zumindest einen Ausgangsanschluß hat, wobei die digitalen Bildsignalprozessoren (R1, R2, R3) konstruiert sind zum Extrahieren von jeweiligen ersten, zweiten und dritten Bildinformationen von digitalen Bildsignalen eines Eingabebildes, wobei die erste, zweite und dritte Bildinformation jeweils in Beziehung steht zu einem ersten, zweiten und dritten Merkmal des Eingabebildes, und wobei die zweite Stufe weiter mindestens erste (REG1), zweite (REG2) und dritte (REG3) Speicherregister aufweist, die jeweils mindestens einen Eingangsanschluß und mindestens einen Ausgangsanschluß haben, wobei die Eingangsanschlüsse der ersten (REG1), zweiten (REG2) und dritten (REG3) Speicherregister jeweils mit dem Ausgangsanschluß des ersten digitalen Bildsignalprozessors (R1), dem Ausgangsanschluß des zweiten digitalen Bildsignalprozessors (R2) und dem Ausgangsanschluß des dritten digitalen Bildsignalprozessors (R3) verbunden sind, wobei die Speicherregister (REG1, REG2, REG3) so konstruiert sind, daß sie die jeweilige erste, zweite und dritte Bildinformation beinhalten, und
eine zweite Stufe (3), **dadurch gekennzeichnet, daß** die zweite Stufe (3) zumindest ein erstes (ST1) und ein zweites (ST2) neuronales Netzwerk beinhaltet, von denen jedes mindestens einen ersten und einen zweiten Eingangsanschluß und eine Vielzahl von Ausgangsanschlüssen hat, wobei der erste Eingangsanschluß des ersten neuronalen Netzwerks (ST1) mit dem Ausgangsanschluß des ersten Speicherregisters (REG1) verbunden ist und der zweite Eingangsanschluß des ersten neuronalen Netzwerks (ST1) mit dem Ausgangsanschluß des zweiten Speicherregisters (REG2) verbunden ist, und der erste Eingangsanschluß des zweiten neuronalen Netzwerks (ST2) verbunden ist mit dem Ausgangsanschluß des zweiten Speicherregisters (REG2) und der zweite Eingangsanschluß des zweiten neuronalen Netzwerks (ST2) verbunden ist mit dem Ausgangsanschluß des dritten Speicherregisters (REG3), und wobei die dritte Stufe weiter mindestens ein drittes neuronales Netzwerk (STOUT) aufweist mit einer Vielzahl von Eingangsanschlüssen, die verbunden sind mit der Vielzahl von Ausgangsanschlüssen des ersten (ST1) und zweiten (ST2) neuronalen Netzwerks und mit einer Vielzahl von Ausgangsanschlüssen, die Ausgangsanschlüsse des Systems (1) sind, wobei die ersten (ST1) und zweiten (ST2) neuronalen Netzwerke so konstruiert sind, daß sie jeweilig Operationen auf die ersten und zweiten Merkmale des Eingabebildes und auf die zweiten und dritten Merkmale des Eingabebildes ausführen bis statistische Werte erhalten werden, und das dritte neuronale Netzwerk (STOUT) konstruiert ist, um die statistischen Werte zu koordinieren und um eine vorbestimmte Klassifikation des Eingabebildes zu produzieren.

2. Das System gemäß Anspruch 1, **dadurch gekennzeichnet, daß** zwischen einem Eingang (A) des Systems (1) und dem Eingangsanschluß des zumindest einen ersten (R1), zweiten (R2) und dritten (R3) digitalen Bildsignalprozessors zumindest ein erster Filter (F1), der zumindest einen Eingangsanschluß und zumindest einen Ausgangsanschluß hat, und weiterhin zumindest ein erstes Speicherelement (M1), das zumindest einen Eingangsanschluß verbunden mit dem Ausgangsanschluß des ersten Filters (F1) und zumindest einen Ausgangsanschluß hat, eingefügt ist, und wobei der Filter (F1) konstruiert ist zum Durchführen einer Normalisation des digitalen Signals des Eingabebildes und wobei das Speicherelement (M1) konstruiert ist zum Speichern von digitalen Signalen des normalisierten Eingabebildes.

3. Das System gemäß Ansprüchen 1 und 2, **dadurch gekennzeichnet, daß** jedes der ersten (ST1) und zweiten (ST2) neuronalen Netzwerke zumindest ein erstes Level von Neuronen beinhaltet, wobei jedes Neuron des ersten neuronalen Netzwerks (ST1) zumindest einen ersten und einen zweiten Eingangsterminal, verbunden mit dem Ausgangsterminal des ersten Speicherregisters (REG1) bzw. mit dem Ausgangsterminal des zweiten Speicherregisters (REG2) und zumindest einem Ausgangsanschluß hat, und wobei jedes der Neuronen des zweiten statistischen Netzwerks (ST2) mindestens einen ersten und einen zweiten Eingangsanschluß verbunden mit dem Ausgangsanschluß des zweiten Speicherregisters (REG2) bzw. dem Ausgangsanschluß des dritten Speicherregisters (REG3) und mindestens einen Ausgangsterminal hat.

4. System gemäß einem der Ansprüche 1, 2 und 3, **dadurch gekennzeichnet, daß** jedes der ersten (ST1) und zweiten (ST2) neuronalen Netzwerke mindestens einen zweiten Level von Neuronen aufweist, von denen jedes eine Vielzahl von Eingangsanschlüssen verbunden mit einer Vielzahl von Ausgangsanschlüssen des ersten Levels von Neuronen hat.

5. System gemäß einem der Ansprüche 1, 2, 3 und 4, **dadurch gekennzeichnet, daß** das dritte neuronale Netzwerk (STOUT) mindestens einen ersten Level von Neuronen aufweist, wobei jedes Neuron eine Vielzahl von Eingangsanschlüssen verbunden mit einer Vielzahl von Ausgangsanschlüssen der Neuronen des ersten neuronalen Netzwerks (ST1) und der Neuronen des zweiten neuronalen Netzwerks (ST2) und zumindest einen Ausgangsanschluß, der ein Ausgangsanschluß des Systems (1) ist, hat.

6. Das System gemäß einem der Ansprüche 1, 2, 3, 4 und 5, **dadurch gekennzeichnet, daß** die Neuronen der ersten (ST1), zweiten (ST2) und dritten (STOUT) neuronalen Netzwerke vom Sigmoid-Typ sind.

7. Das System gemäß einem der Ansprüche 1 und 2, **dadurch gekennzeichnet, daß** die zweite Stufe (3) mindestens ein viertes neuronales Netzwerk (ST3) aufweist, das mindestens einen ersten und einem zweiten Eingangsanschluß, wobei der erste Eingangsanschluß verbunden ist mit dem Ausgangsanschluß des ersten Speicherregisters (REG1) und der zweite Eingangsanschluß verbunden ist mit dem Ausgangsanschluß des dritten Speicherregisters (REG3) und eine Vielzahl von Ausgangsanschlüssen verbunden mit einer Vielzahl von Eingangsanschlüssen des dritten neuronalen Netzwerks (STOUT) hat.

8. Das System gemäß einem der vorhergehenden Ansprüche 1, 2 und 7, **dadurch gekennzeichnet, daß** das vierte neuronale Netzwerk (ST3) mindestens einen ersten Level von Neuronen aufweist, wobei jedes Neuron mindestens einen ersten und einen zweiten Eingangsanschluß verbunden mit dem Ausgangsanschluß des ersten Speicherregisters (REG1) beziehungsweise mit dem Ausgangsanschluß des dritten Speicherregisters (REG3) und mindestens einen Ausgangsanschluß hat.

9. System gemäß einem der Ansprüche 1, 2, 7 und 8, **dadurch gekennzeichnet, daß** das vierte neuronale Netzwerk (ST3) mindestens einen zweiten Level von Neuronen beinhaltet, von denen jedes eine Vielzahl von Eingangsanschlüssen verbunden mit einer Vielzahl von Ausgangsanschlüssen der Neuronen des ersten Levels hat.

10. System gemäß einem der Ansprüche 1, 2, 7, 8 und 9, **gekennzeichnet dadurch daß** die Neuronen des vierten neuronalen Netzwerks (ST3) vom Sigmoid-Typ sind.

11. System gemäß einem der vorhergehenden Ansprüche, **dadurch gekennzeichnet, daß** das erste Merkmal des Eingabebildes in Beziehung steht zu der Position der dunklen Punkte (Dark Points) des Eingabebildes.

12. System gemäß einem der vorhergehenden Ansprüche, **dadurch gekennzeichnet, daß** das zweite Merkmal des Eingabebildes in Beziehung steht mit der Richtung der Tangente zu der Kante des Eingabebildes, und zwar in Punkten der Kante.

13. System gemäß einem der vorhergehenden Ansprüche, **dadurch gekennzeichnet, daß** das dritte Merkmal des Eingabebildes in Beziehung steht zu der Krümmung bzw. Biegung der Kante des Eingabebildes in Konturen der Punkte der Kante.

14. Verfahren zum Identifizieren von alphanumerischen Zeichenbildern, das die folgenden Schritte aufweist:
Erzeugen eines Eingabebildes;
Extrahieren mittels erster, zweiter und dritter digitalen Bildsignalprozessoren (R1, R2, R3), jeweilige erste, zweite und dritte Bildinformation aus digitalen Bildsignalen des Eingabebildes, wobei die erste, zweite und dritte Bildinformation in Beziehung steht zum ersten, zweiten und dritten Merkmal des Eingabebildes;
Speichern der ersten, zweiten und dritten Bildinformation, die in Beziehung stehen zu Bildmerkmalen des Eingabebildes, in jeweiligen ersten, zweiten und dritten Speicherregistern (REG1, REG2, REG3);
und durch die folgenden Schritte **gekennzeichnet**:
Verarbeiten der ersten und zweiten Merkmale des Eingabebildes mit einem ersten neuronalen Netzwerk (ST1), um erste statistische Werte zu erzeugen;
Verarbeiten der zweiten und dritten Merkmale des Eingabebildes mit einem zweiten neuronalen Netzwerk (ST2), um zweite statistische Werte zu erzeugen;
Verarbeiten der ersten und zweiten statistischen Werte mit einem dritten neuronalen Netzwerk (STOUT), um eine vorbestimmte Klassifikation des Eingabebildes zu produzieren bzw. erzeugen.

## Revendications

1. Système de reconnaissance d'image de caractères alphanumériques comprenant un premier étage (2) comprenant au moins des premier (R1), deuxième (R2) et troisième (R3) processeurs de signaux numériques d'image ayant chacun au moins une borne d'entrée et au moins une borne de sortie, lesdits processeurs de signaux numériques d'image (R1, R2, R3) étant conçus pour extraire, respectivement, une première, deuxième et troisième information d'image des signaux numériques d'image d'une image d'entrée, lesdites première, deuxième et troisième informations d'image dépendant desdites première, deuxième et troisième caractéristiques de ladite image d'entrée, respectivement, et comprenant au moins des premier (REG1), deuxième (REG2) et troisième (REG3) registres de mémoire, chacun ayant au moins une borne d'entrée et au moins une borne de sortie, lesdites bornes d'entrée desdits premier (REG1), deuxième (REG2) et troisième (REG3) registres de mémoire étant reliées, respectivement, à la borne de sortie dudit premier processeur de signaux numériques d'image (R1), à la borne de sortie dudit deuxième processeur de signaux numériques d'image (R2), et à la borne de sortie dudit troisième processeur de signaux numériques d'image (R3), lesdits registres de mémoire (REG1, REG2, REG3) étant conçus pour contenir, respectivement, lesdites première, deuxième et troisième informations d'image, et un deuxième étage (3), et **caractérisé en ce que** ledit deuxième étage (3) comprend au moins des premier (ST1) et deuxième (ST2) réseaux neuronaux ayant chacun au moins des première et deuxième bornes d'entrée et une pluralité de bornes de sortie, la première borne d'entrée dudit premier réseau neuronal (ST1) étant reliée à la borne de sortie dudit premier registre de mémoire (REG1), et la deuxième borne d'entrée dudit premier réseau neuronal (ST1) étant reliée à la borne de sortie dudit deuxième registre de mémoire (REG2), et la première borne d'entrée dudit deuxième réseau neuronal (ST2) étant reliée à la borne de sortie dudit deuxième registre de mémoire (REG2), et la deuxième borne d'entrée dudit deuxième réseau neuronal (ST2) étant reliée à la borne de sortie dudit troisième registre de mémoire (REG3), et au moins un troisième réseau neuronal (STOUT) ayant une pluralité de bornes d'entrée reliée à la pluralité de bornes de sortie desdits premier (ST1) et deuxième (ST2) réseaux neuronaux, et une pluralité de bornes de sortie qui sont des bornes de sortie du système (1), lesdits premier (ST1) et deuxième (ST2) réseaux neuronaux étant conçus pour effectuer des opérations, respectivement, sur lesdites première et deuxième caractéristiques de ladite image d'entrée, et sur lesdites deuxième et troisième caractéristiques de ladite image d'entrée jusqu'à ce que des valeurs statistiques soient obtenues, et ledit troisième réseau neuronal (STOUT) étant conçu pour coordonner lesdites valeurs statistiques et pour produire une classification prédéterminée de l'image d'entrée.

2. Système selon la revendication 1, **caractérisé en ce que** entre une entrée (A) dudit système (1) et la borne d'entrée d'au moins un desdits premier (R1), deuxième (R2) et troisième (R3) processeurs de signaux numériques d'image est introduit au moins un premier filtre (F1) ayant au moins une borne d'entrée et au moins une borne de sortie, et au moins un premier élément de mémoire (M1) ayant au moins une borne d'entrée reliée à la borne de sortie dudit premier filtre (F1), au moins une borne de sortie et ledit filtre (F1) étant conçus pour réaliser une normalisation des signaux numériques de l'image d'entrée, et ledit élément de mémoire (M1) étant conçu pour mémoriser les signaux numériques de l'image d'entrée normalisée.

3. Système selon les revendications 1 et 2, **caractérisé en ce que** chacun desdits premier (ST1) et deuxième (ST2) réseaux neuronaux comprend au moins un premier niveau de neurones, chaque neurone dudit premier réseau neuronal (ST1) ayant au moins des première et deuxième bornes d'entrée reliées à la borne de sortie dudit premier registre de mémoire (REG1) et à la borne de sortie dudit deuxième registre de mémoire (REG2), respectivement, et au moins une borne de sortie, et chacun des neurones dudit deuxième réseau statistique (ST2) ayant au moins des première et deuxième bornes d'entrée reliées à la borne de sortie dudit deuxième registre de mémoire (REG2) et à la borne de sortie dudit troisième registre de mémoire (REG3), respectivement, et au moins une borne de sortie.

4. Système selon l'une quelconque des revendications 1, 2 et 3, **caractérisé en ce que** chacun desdits premier (ST1) et deuxième (ST2) réseaux neuronaux comprend au moins un deuxième niveau de neurones, chacun ayant une pluralité de bornes d'entrée reliée à une pluralité de bornes de sortie dudit premier niveau de neurones.

5. Système selon l'une quelconque des revendications 1, 2, 3 et 4, **caractérisé en ce que** ledit troisième réseau neuronal (STOUT) comprend au moins un niveau de neurones, chaque neurone ayant une pluralité de bornes d'entrée reliée à une pluralité de bornes de sortie des neurones dudit premier réseau neuronal (ST1) et des neurones dudit deuxième réseau neuronal (ST2), et au moins une borne de sortie qui est une borne de sortie dudit système (1).

6. Système selon l'une quelconque des revendications 1, 2, 3, 4 et 5, **caractérisé en ce que** les neurones desdits premier (ST1), deuxième (ST2) et troisième (STOUT) réseaux neuronaux sont du type sigmoïde.

7. Système selon les revendications 1 ou 2, **caractérisé en ce que** le deuxième étage (3) comprend au moins un quatrième réseau neuronal (ST3) ayant au moins des première et deuxième bornes d'entrée, ladite première borne d'entrée étant reliée à la borne de sortie dudit premier registre de mémoire (REG1), et ladite deuxième borne d'entrée étant reliée à la borne de sortie dudit troisième registre de mémoire (REG3), et une pluralité de bornes de sortie reliée à une pluralité de bornes d'entrée dudit troisième réseau neuronal (STOUT).

8. Système selon l'une quelconque des revendications 1, 2 et 7, **caractérisé en ce que** ledit quatrième réseau neuronal (ST3) comprend au moins un premier niveau de neurones, chaque neurone ayant au moins des première et deuxième bornes d'entrée reliées à la borne de sortie dudit premier registre de mémoire (REG1) et à la borne de sortie dudit troisième registre de mémoire (REG3), respectivement, et au moins une borne de sortie.

9. Système selon l'une quelconque des revendications 1, 2, 7 et 8, **caractérisé en ce que** ledit quatrième réseau neuronal (ST3) comprend au moins un deuxième niveau de neurones ayant chacun une pluralité de bornes d'entrée reliée à une pluralité de bornes de sortie des neurones du premier niveau.

10. Système selon l'une quelconque des revendications 1, 2, 7, 8 et 9, **caractérisé en ce que** les neurones dudit quatrième réseau neuronal (ST3) sont de type sigmoïde.

11. Système selon l'une quelconque des revendications précédentes, **caractérisé en ce que** ladite première caractéristique de ladite image d'entrée dépend de la position des points sombres de ladite image d'entrée.

12. Système selon l'une quelconque des revendications précédentes, **caractérisé en ce que** ladite deuxième caractéristique de ladite image d'entrée dépend de la direction de la tangente au bord de ladite image d'entrée, dans des points dudit bord.

13. Système selon l'une quelconque des revendications précédentes, **caractérisé en ce que** ladite troisième caractéristique de l'image d'entrée dépend de la courbure dudit bord de ladite image d'entrée dans des contours de points dudit bord.

14. Procédé pour identifier une image de caractères alphanumériques comprenant les étapes consistant à :
- générer une image d'entrée ;
- extraire à l'aide de premier, deuxième et troisième processeurs de signaux numériques d'image (R1, R2, R3), respectivement, des première, deuxième et troisième informations d'image à partir de signaux numériques d'image de ladite image d'entrée, lesdites première, deuxième et troisième informations d'image dépendant des première, deuxième et troisième caractéristiques de ladite image d'entrée ;
- stocker dans les premier, deuxième et troisième registres de mémoire (REG1, REG2, REG3), respectivement, lesdites première, deuxième et troisième informations d'image dépendant desdites caractéristiques d'image de ladite image d'entrée ;
et **caractérisé par** les étapes consistant à :
- traiter lesdites première et deuxième caractéristiques de ladite image d'entrée avec un premier réseau neuronal (ST1) afin de générer les premières valeurs statistiques ;
- traiter lesdites deuxième et troisième caractéristiques de ladite image d'entrée avec un deuxième réseau neuronal (ST2) afin de générer les deuxièmes valeurs statistiques ;
- traiter lesdites premières et deuxièmes valeurs statistiques avec un troisième réseau neuronal (STOUT) afin de produire une classification prédéterminée de ladite image d'entrée.
